(19) Europäisches Patentamt
European Patent Office
Office européen des brevets

(11) **EP 3 289 238 B1**

(12) **EUROPEAN PATENT SPECIFICATION**

(45) Date of publication and mention
of the grant of the patent:
**21.10.2020 Bulletin 2020/43**

(51) Int Cl.:
***F16D 65/092*** *(2006.01)*  ***G01L 1/18*** *(2006.01)*

(21) Application number: **16729505.4**

(86) International application number:
**PCT/EP2016/062004**

(22) Date of filing: **27.05.2016**

(87) International publication number:
**WO 2016/189134 (01.12.2016 Gazette 2016/48)**

(54) **BRAKE PAD FOR VEHICLES**

BREMSBELAG FÜR FAHRZEUGE

PLAQUETTE DE FREIN POUR VÉHICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.05.2015 IT UB20151029**

(43) Date of publication of application:
**07.03.2018 Bulletin 2018/10**

(73) Proprietor: **ITT Italia S.r.l.**
**20020 Lainate (IT)**

(72) Inventors:
• **DONZELLI, Daniele**
**10062 Luserna San Giovanni (Torino) (IT)**
• **SOLARI, Mattia**
**12032 Barge (Cuneo) (IT)**
• **TERRANOVA, Marco**
**10149 Torino (IT)**
• **SERRA, Stefano**
**10060 San Pietro Val Lemina (TO) (IT)**
• **MARTINOTTO, Luca**
**20025 Legnano (Milano) (IT)**

(74) Representative: **Rapisardi, Mariacristina**
**Ufficio Brevetti Rapisardi S.r.l.**
**Via Serbelloni, 12**
**20122 Milano (IT)**

(56) References cited:
EP-A1- 1 923 592    WO-A1-2014/170726
US-A1- 2006 179 952    US-A1- 2014 311 833

## Description

The present invention relates to a sensorized brake pad for vehicles.

From the Italian patent application No. TO2013A307 a braking device for vehicles is known, comprising a metallic support element, a block of friction material supported by the metallic support element, and one or more piezoceramic sensors supported by the metallic support element and interposed between the block of friction material and the metallic support element.

During use on the vehicle, the piezoceramic sensors detect the forces that are exchanged in use between the block of friction material (brake pads or brake shoes for vehicles still equipped with drum brakes) and the element to be braked, disk or drum, which is bound to the wheel.

This entails the ability to detect and/or predict the generation of numerous problems, from an abnormal consumption of the brake pads, for example due to said brake pads "touching" the disc even when the brake is not actuated, for example due to poor alignment of the brake calipers, or rather noise, vibration and unwanted screeching during braking.

A braking device of this type has some critical aspects which are linked to the high temperatures and pressures to which it is subjected during the production process and/or that develop during braking.

It must be noted in particular that the assembly of the braking device requires the application of a very high compression load in order to implement the permanent joining of the block of friction material to the metallic support element.

The crushing to which the piezoceramic sensors are subjected may be of such a magnitude that there is a risk of compromising their structural integrity and consequently also their correct operation.

The object of the present invention is to provide a sensorized braking device for vehicles that is both reliable and efficient in detecting the presence and/or magnitude of stresses at the interface with the element being braked during braking.

Another object of the present invention, in order to increase its flexibility of use in applications that are not only for light and industrial vehicles but also for heavy vehicles (Trucks, Buses, etc.) where the operating temperatures can exceed 600°C, is to provide a reliable production process for the production of a sensorized braking device that is both robust and resistant to high temperatures. A further object of the invention is to provide a method for producing a sensorized braking device for vehicles which ensures that the optimal performance of said braking device is maintained over an extended period of time.

These and other objects are achieved by means of a braking pad for vehicles according to claim 1

Advantageously, said protective element is made of an electrically insulating material. Advantageously, said protective element exhibits mechanical properties such as to limit the force transmitted to the piezoceramic sensor when an external compression force is applied to said block of friction material.

Advantageously, said protective element is configured to direct, at least partly, said external compression force onto an area of the support element surrounding said at least one piezoceramic sensor.

Therefore, the protective element has various features as it functions as a mechanical protection against damage due to handling the braking element during the production process, as an electrical insulator for the piezoceramic sensor, and as a limiter and deflector of the force transmitted to the piezoceramic sensor. According to an advantageous aspect of the invention, the piezoceramic sensor lies in a raised arrangement on the support element, and the protective element is made up of a half-shell having an internal contact surface uniform with the external surface of the piezoceramic sensor and a uniform rest base on said support element area.

In a preferred embodiment of the invention said protective element is dome-shaped. In a preferred embodiment of the invention said protective element is made up of a material comprising a resin or made up of a ceramic material.

In a preferred embodiment of the invention said protective element has a thermal shield for said at least one piezoceramic sensor.

In a preferred embodiment of the invention said thermal shield is provided by a thermally insulating layer of said protective element and/or by a thermally insulating element accommodated inside said protective element.

In a preferred embodiment of the invention at least one thermally insulating layer covering said support element is provided, whereon said at least one piezoceramic sensor is arranged.

The production process can take advantage of established non-sensorized braking device technology that already exists on the market.

The brake pad according to the invention may also employ the same material used for the block of friction material provided for non-sensorized braking devices available on the market.

The forming process for the sensorized braking device according to the invention therefore envisages the same process temperatures and pressures as those used for known non-sensorized braking devices that experience temperatures and pressures greater that 200°C and 400 kg/cm$^2$ respectively.

Given that the maximum load conditions that piezoceramic sensors can withstand are well below these pressures, with the present invention protective elements are advantageously provided that make the actual application of the established technology for non-sensorized braking devices that are on the market possible, thus guaranteeing the integrity of the sensors and therefore of the overall functionality of the braking device.

Further characteristics and advantages of the present invention will become clear from the following description of an exemplary non limiting embodiment given purely by way of example and with reference to the drawings attached, in which:

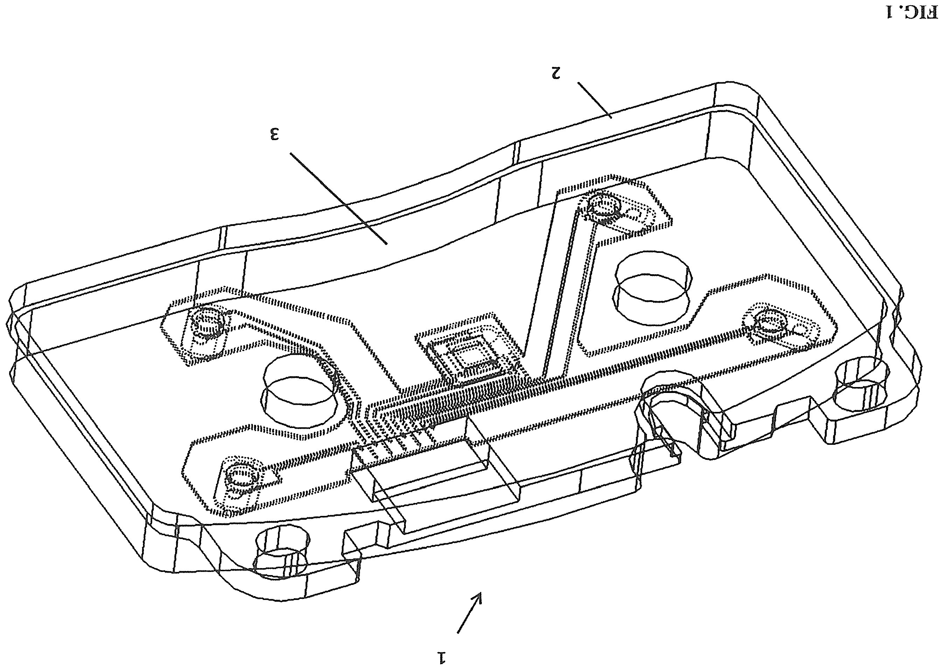

- Figure 1 schematically shows a perspective view of a braking device;

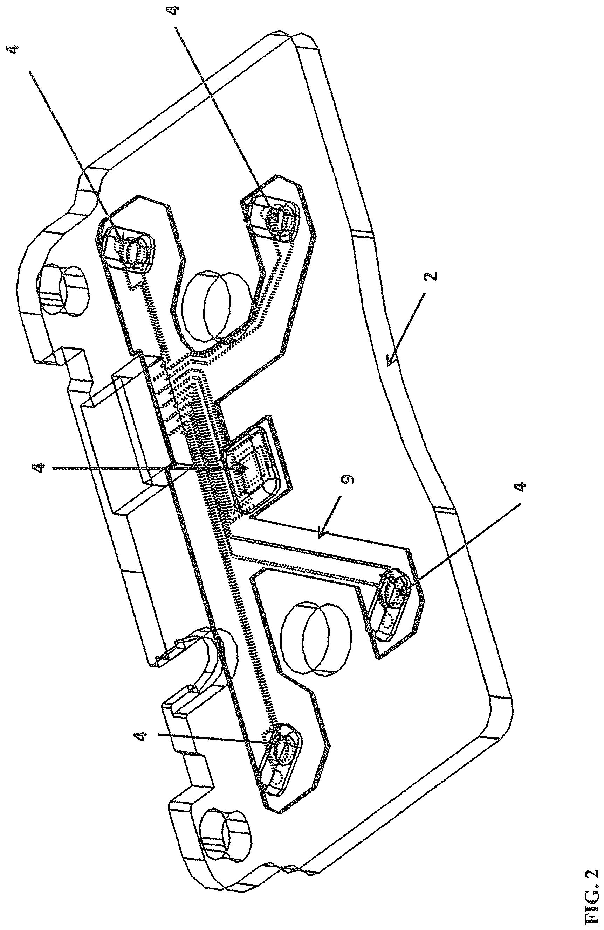

- Figure 2 shows a perspective view of the braking device of Figure 1 without the block of friction material;

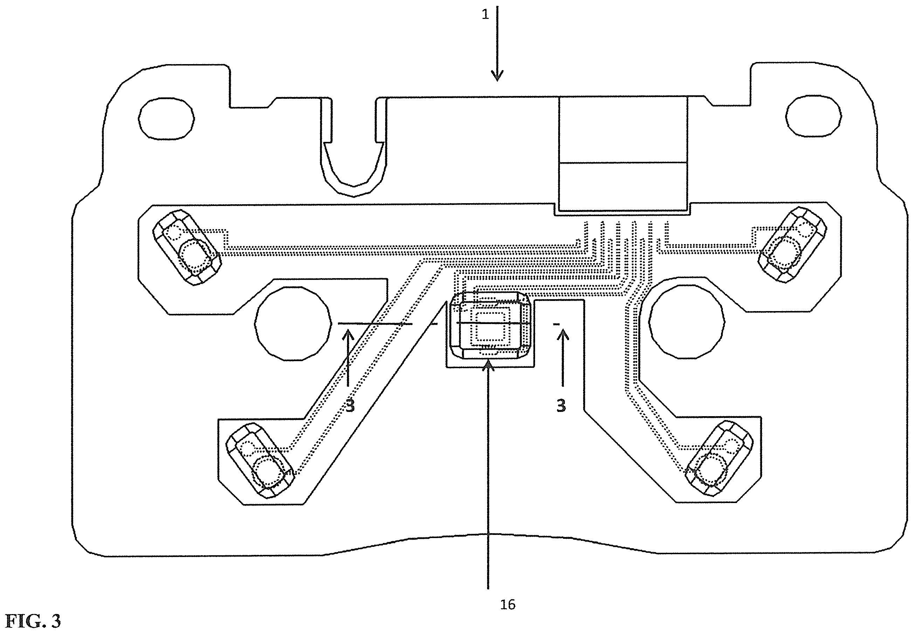

- Figure 3 shows a plan view of the braking device of Figure 1;

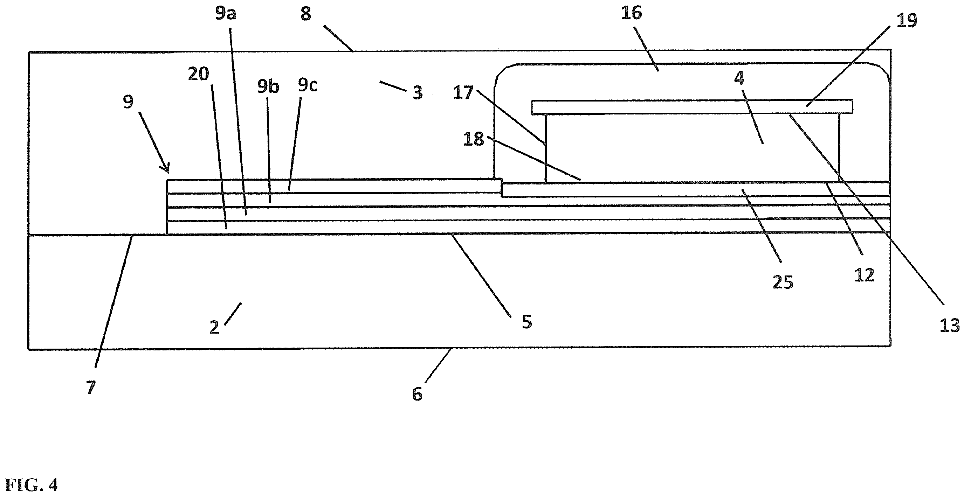

- Figure 4 shows a section of the brake device along the line 3 - 3 of Figure 3;

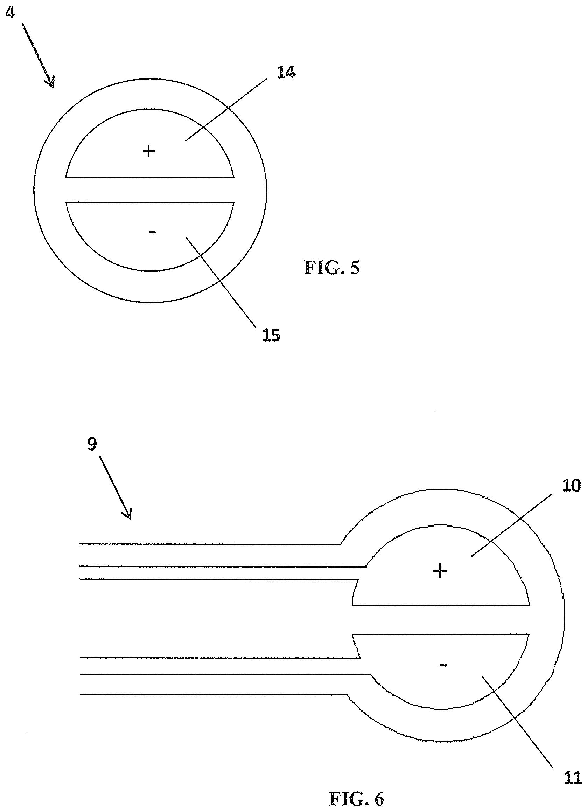

- Figures 5 and 6 show a plan view of a piezoceramic sensor and respectively a terminal of the electrical circuit comprising the contacts to which the electrodes of the piezoceramic sensor are connected;
- Figure 7 shows a response curve linking the force transmitted to the sensor as the ratio between the elastic constants of the block of friction material and the protective element varies;
- Figure 8 shows the sensorized braking device in an overall braking system;

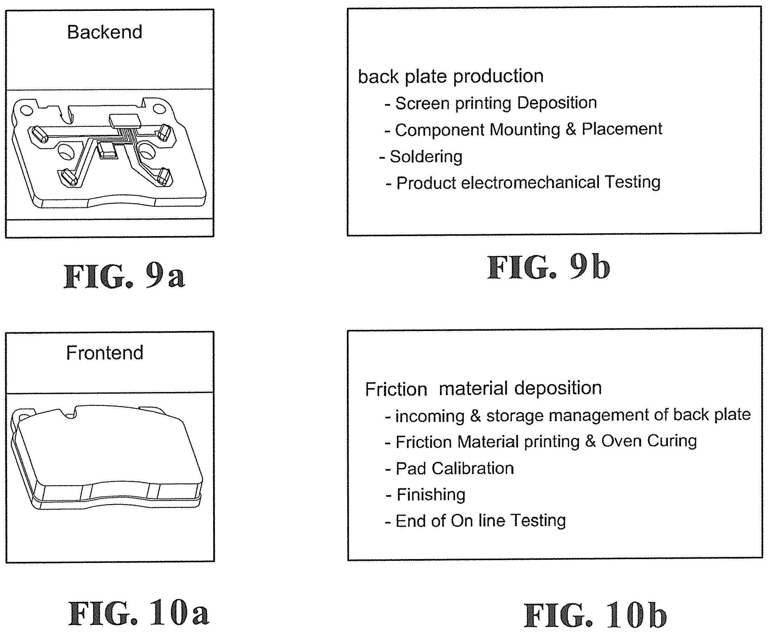

- Figure 9a shows a backend perspective view of the sensorized braking device in a first stage of its manufacturing process;
- Figure 9b shows a list of working steps in the first stage of the manufacturing process;
- Figure 10a shows a frontend perspective view of the sensorized braking device in a second stage of its manufacturing process;
- Figure 10b shows a list of working steps in the second stage of the manufacturing process;

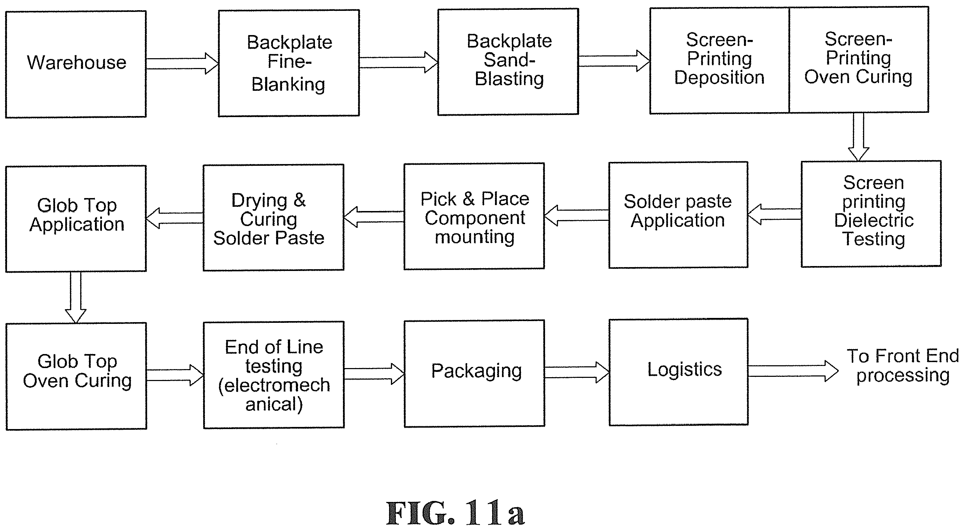

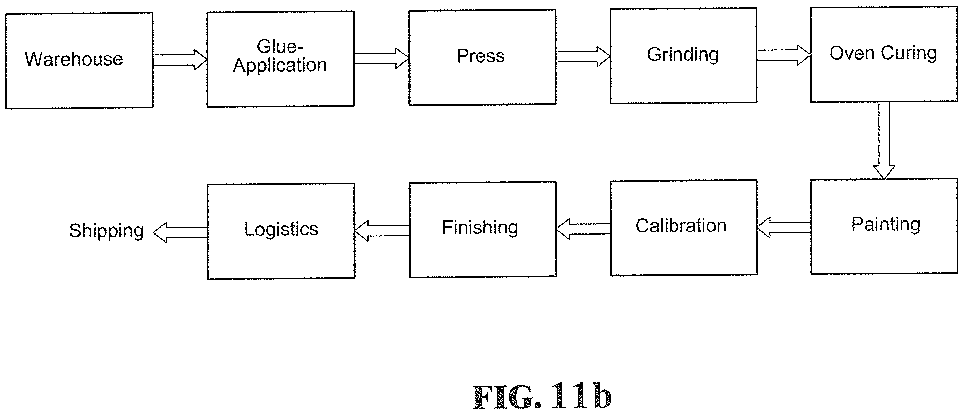

- Figure 11a and 11b show flow charts of backend and respectively frontend manufacturing process of the sensorized braking device;

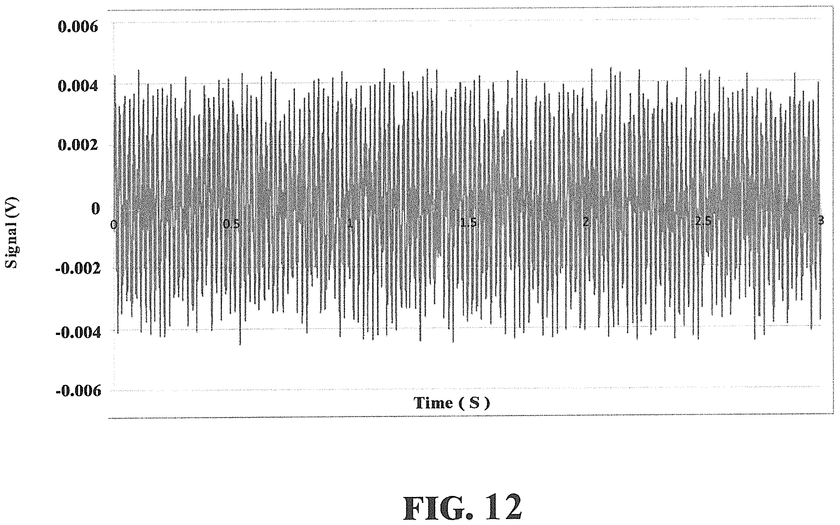

- Figure 12 shows a diagram of the sensor response when no brake is performed;

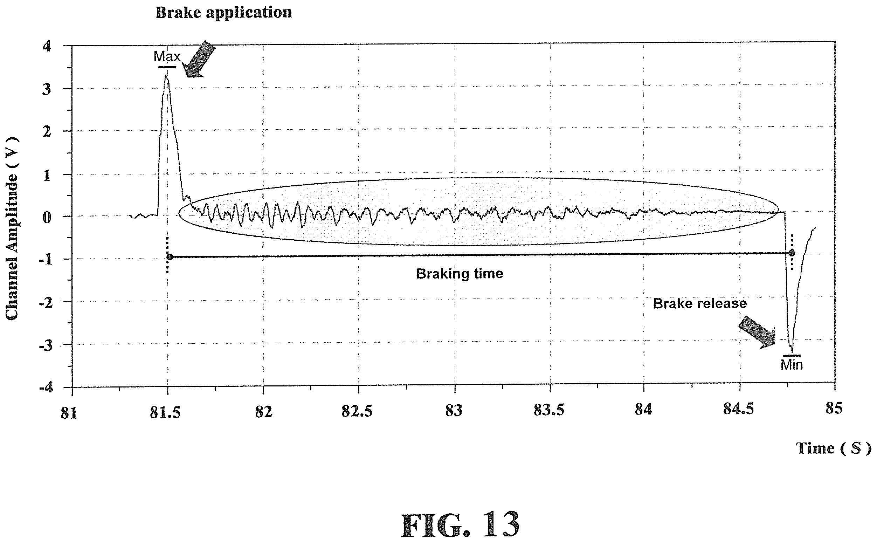

- Figure 13 shows a diagram of the sensor response on dynamic brake application;
- Figures 14a, 14b and 14c show schematically steps of a method of application of the protective layer by Dam&Fill technique.

With reference to the figures, reference number 1 indicates a sensorized braking device for vehicles, in the example illustrated a brake pad, that is intended to equip a vehicle braking system.

Here and below specific reference will be made to a braking device formed of the brake pad 1, but it is clear that what follows is also identically applicable to the brake shoe of a drum brake.

The brake pad 1 comprises a support element 2, preferably but not necessarily metallic, and known as a "backplate", a block of friction material 3 supported by the element 2, and one or more piezoceramic sensors 4 supported by said support element 2 and interposed between the latter and the block of friction material 3. The piezoceramic sensors 4 are supported in a raised arrangement on the support element 2.

It is clear that in the case of a brake shoe there could be elements corresponding to those described for the brake pad 1. Therefore, for a person skilled in the art, the following description is easily transferable to obtain sensorized brake shoes. The support element 2 in particular is shaped as a contour shaped flat plate having a first main planar surface 5 that is intended in use to face an element to be braked, such as a vehicle brake disc, and a second main planar surface 6 that is parallel to the first main planar surface 5.

The block of friction material 3 has in particular a first main planar surface 7 that is conjugated to the first planar surface 5 of the support element 2 and a second planar surface 8 that is parallel to the first planar surface 7, and intended in use to direct contact with the element to be braked.

The piezoceramic sensors 4 are able to detect the forces that are exchanged in use during the contact between the pad 1 and the element to be braked as a result of their inherent ability to emit an electrical signal when subjected to a mechanical stress.

For this purpose the support element 2 supports an electrically insulated electrical circuit 9 having the electrical contacts 10, 11 to which the electrodes 14, 15 of piezoceramic sensors 4 are connected.

The electrical circuit 9 collects the electrical signal, which is generated without the need for an electrical power supply from piezoceramic sensors 4, when they are subjected to a mechanical stress in the direction of polarization.

The electrical signal emitted by the piezoceramic sensors 4 and collected by the electrical circuit 9 can either be processed in real time or at a later point in time.

The piezoceramic sensors 4 are made of piezoceramic materials with a Curie temperature greater than 200°C and are formed of a preferably cylindrical body that is polarized in the direction of its axis and delimited by a pair of opposite flat faces 12 and 13 that are arranged in use parallel to the main planar surfaces 5, 6 of the support element 2.

Preferably only one of the faces 12, 13, in particular the one facing the electrical circuit 9, has both of the electrical signal sampling electrodes 14, 15.

The electrical circuit 9 has branches that are suitably shaped in order to arrange the piezoceramic sensors 4 in discrete positions on the support element 2 and is also provided with an integrated electrical connector at the edge of the support element 2. In addition to the piezoceramic sensors, which are essentially pressure sensors, one or more temperature sensors and/or one or more shear force sensors that are electrically connected to the electrical circuit 9 may also optionally be integrated on the support element 2.

The electrically insulated electrical circuit 9 is preferably screen printed and applied directly onto the support element 2.

All of the sensors integrated into the support element 2 are installed onto the electrically insulated electrical circuit 9 from the side of the latter that faces the block of friction material 3. The sensors that are thus integrated into the support element 2 are highly capable of measuring the forces acting on the braking device during braking or in general during the running of the vehicle.

Specific examples of piezoceramic sensors 4 that may be used are for instance PIC 255 (Manufacturer: PI Ceramic), PIC 300 (Manufacturer: PI Ceramic), PIC 181 (Manufacturer: PI Ceramic), PIC 050 (Manufacturer: PI Ceramic), TRS BT200 (Manufacturer: TRS Ceramics), PZT5A1 (Manufacturer: Morgan Advanced Ceramic), PZT5A3 (Manufacturer: Morgan Advanced Ceramic).

The arrangement for piezoceramic sensors 4 is dependent on what it is intended to be measured.

If the purpose is to measure the pressure and noise distribution along the brake pad 1, the preferred but not restrictive configuration is the one shown where four pressure sensors (normal force) are placed on the four corners of the backplate, while a shear sensor is placed about in the center of mass of the braking pad 1. However, in case the pressure or noise distribution is not a concern, then it is preferable to place shear and force sensor in the nearby of the center of mass of the braking pad 1.

A damping layer 101 can be provided that is interposed between the block of friction material 3 and the support element 2.

The damping layer, if provided, has in particular a first main surface that is conjugated to the first planar surface 5 of the support element 2 and a second surface that is conjugated to the first planar surface 7 of the block of friction material 3. Damping layer 101 it mostly made by phenolic resin material.

Advantageously each piezoceramic sensor 4 is embedded within a corresponding protective element 16.

The protective element 16 is located on the support element 2 at the position of the piezoceramic sensor 4.

For the electrical insulation of the piezoceramic sensor 4 the protective element 16 is made of electrically insulating material.

The protective element 16 has, as we shall see, mechanical properties, and in particular an elastic modulus that has been carefully chosen in order to limit the force transmitted to the piezoceramic sensor 4 when an external compression force is applied to the block of friction material 3.

The protective element 16 is in particular configured in order to direct at least part of the external compression force to an area of the support element 2 surrounding the piezoceramic sensor 4 itself.

As we shall see below, a considerable external compression force is in fact generated during the hot pressing of the block of friction material onto the support 2. Preferably all of the other sensors and possibly also other components of the electrical circuit 9 have a respective protective element of the same type as that described above.

The protective element 16 completely embeds the piezoceramic sensor 4 and is made up of a half-shell having an internal direct or indirect contact surface 17 uniform with the external surface of the piezoceramic sensor 4 and a uniform direct or indirect rest base 18 on said support element 2.

The protective element 16 preferably is dome-shaped.

The protective element 16 is preferably made of a resin-based material, for example the material for the protective element is comprised of polyimide resins, epoxy resins (loaded or not), Bismaleimide resins and Cyanate-Ester resins.

The protective element can, for example, be made by means of the dripping of material at a standard pressure and moderate temperatures (usually less than 200°C) prior to forming the block of friction material 3.

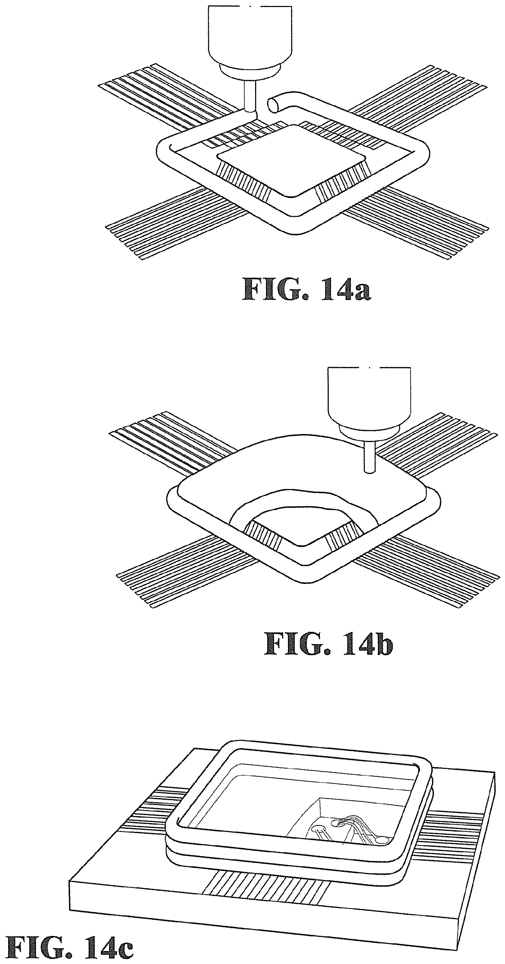

With reference to figures 14a, 14b and 14c, a method to apply the protective element 16 to the piezoelectric sensor is the following. The resin for the protective element 16 is deposited by a dispenser for resin material, preferably with an automatic dispenser. Specially for resins with a low level of thixotropy Dam&Fill technique is recommended: a ring of a sacrificial thixotropy resin is made first around the sensor in order to build a kind of dam to enclose the resin used for making the protective element 16. Then the material for protective element 16 is used to fill up the dam in order to cover the sensor.

Ceramic materials that are much harder than resins and suitable for temperatures above 350°C may however also be used for the protective element.

Thanks to the provision of protective elements within the support element 2 at those points where the sensors are actually placed, any limitation associated with effectively implementing the existing forming technology is substantially resolved. In fact, thanks to the protective elements, the load of the forces actually experienced by the sensors during the production of the braking device or when the braking device is in operation is reduced, provided that the mechanical properties of the protective elements themselves are suitably chosen.

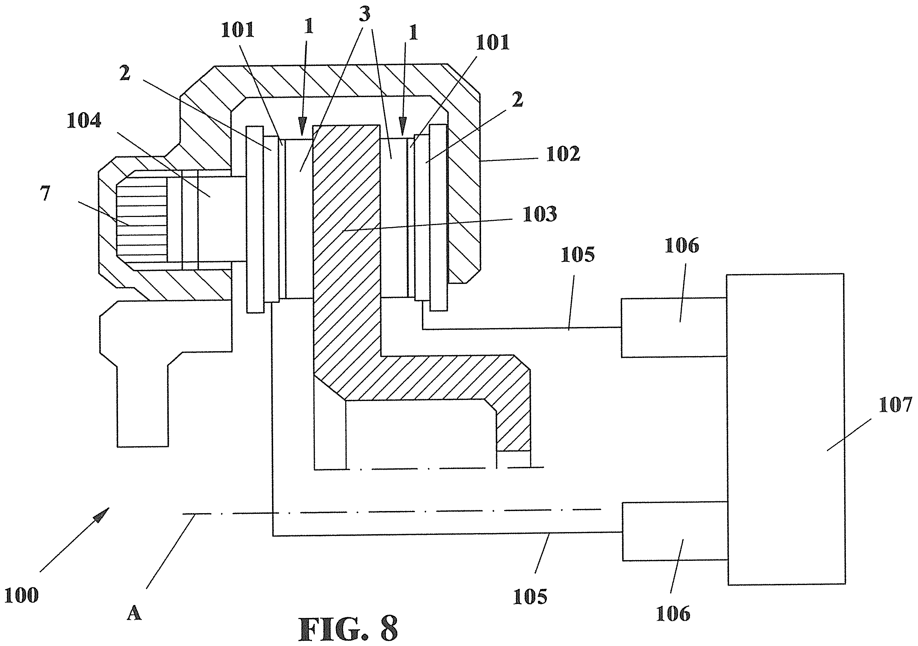

Figure 8 shows the overall system 100 embodying the braking device 1.

This system 100 comprises a caliper 102 and disk shaped rotor 103 rotating about an axis of the wheel of the vehicle. Two opposite braking devices 1 are movable by a corresponding piston 104 so that friction material 3 thereof may engage or disengage the opposite sides of the disk shaped rotor 103. Signals coming from both braking devices 1 are transmitted via cables 105 to a signal conditioning device comprising analog front ends 106 and digitalization and processing unit 107.

Production of the braking device in particular envisages the application of a notable external compression force F upon the block of friction material 3 in order to integrate it with the support element 2.

We refer to the load situation acting upon a piezoceramic sensor 4.

The protective element 16 experiences a force whose resultant F' is different from the compression force F applied to the block of friction material 3.

Such a resultant force F' is also transmitted to the piezoceramic sensor 4 which experiences a final force $F_p$ which in general is also different from the force F' but obviously linked to it. $F_p$ is the force that induces the electrical signal that is effectively measured by the piezoceramic sensor.

We assume that the transfer of the external compression force F takes place from the surface of the block of friction material 3 to the underlying layers without appreciable tangential deformations, in other words, we assume that the block of friction material 3 is substantially rigid in the longitudinal direction.

In the model it is also assumed that the friction material and the protective element are represented in the mechanical model by springs with the elastic constants k and k' respectively, and that the linear dimensions of the spring relating to the block of friction material are the same as the block of friction material itself in the regions outside and within the area of application of the protective element.

Supposing therefore a linear elastic behavior of the materials, then Hooke's law is valid, according to which:

$$F=kx$$

$$F'=k'x'$$

$$F_p=k_px_p$$

where x, x' and respectively $x_p$ represent the deformation in the direction of compression, k, k' and respectively $k_p$ the elastic constant.

It can be shown that:

$$F'=2F/(1+k/k')$$

$$F_p=4F/(1+k'/k_p)(1+k/k')$$

The force $F_p$ as experienced by the piezoceramic sensor 4 is therefore linked but not equal to the force F originally applied to the block of friction material 3. The force $F_p$ attenuation factor depends upon the choice of the ratios $k'/k_p$ and $k/k'$ and can be adjusted,

with k and $k_p$ being equal, by increasing or decreasing the elastic constant k'. It follows that once the block of friction material and the piezoceramic sensor are defined, which normally have quite strong limitations from the point of view of the variation in their mechanical properties as well as in terms of the requirements regarding their physical properties, the choice of the optimum values for k', or the mechanical properties of the protective element, then becomes crucial in order to optimize the transfer of forces.

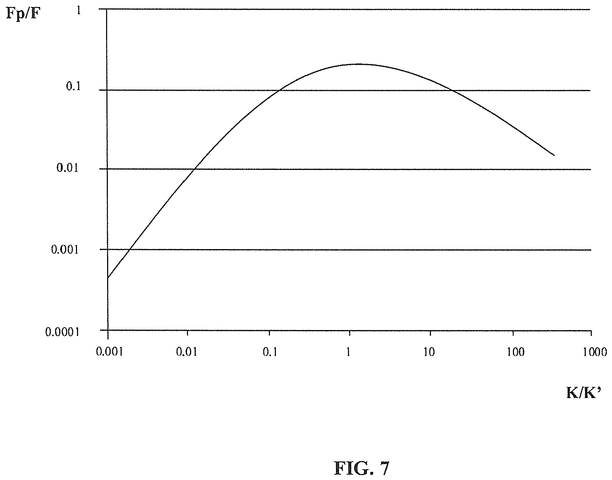

By way of a significant as well as explanatory example, we will consider the result from the model assuming realistic values for k and $k_p$, in particular produced from the measurements of the elastic constants for the block of friction material and the piezoceramic sensor. The constant k' will instead be regarded as a parametric variable to be chosen in order to optimize the response of the piezoceramic sensor. Suppose then that $k_p=10^{11}$ N/m =$10^{11}$ N/m and k=$10^{10}$ N/m. These values of $k_p$ and k for the block of friction material and the piezoceramic sensor are values that are close to reality. In this case the relationship between $F_p/F$ depends only upon k'. Fig. 7 shows the response curve $F_p/F$ as a function of k/k' while considering the above values of $k_p$ and k. It is clear that there is an optimal value regarding the ratio between the mechanical constants k/k' that optimizes the response of piezoceramic sensor. Therefore, once the piezoceramic sensor and the block of friction material are fixed, then the protective element must be chosen carefully. For example, choosing resins that are too soft compared to the optimal value at the maximum point of the response curve will determine a weak coupling which will lead to the forces being transferred inefficiently, while choosing resins that are too hard, again compared to the optimal value at the maximum point of the response curve, will lead to the deformation being transferred to the piezoceramic sensor inefficiently. With regard to fig. 7 it should be noted that a logarithmic scale has been applied to the abscissa and ordinate axes, with the result that, away from the maximum point of the response curve, an order of magnitude variation in the ratio of the elastic constants will have similar results also on the forces measured at the location of the piezoceramic sensor. Only by keeping the values of the elastic constants near the optimum value at the maximum point of the response curve will efficient transfer be maintained. This means that also the thermo-mechanical properties have to be selected with care in order to avoid, as a result of softening or hardening of the mechanical properties between the materials employed, loss of efficiency as the temperature changes. Working in the vicinity of the maximum point of the response curve results then in a further clear advantage, namely that the stability of the response is greatly superior also in the case of variations in the thermo-mechanical properties, even at large intervals.

Therefore, by suitably selecting the mechanical properties of the material composing the protective element (in the sense of softening or hardening), it is possible to maintain the load experienced by the piezoceramic sensors well below the maximum load bearable by this class of sensors during both the braking device production process and normal operation of the braking device.

For the purposes of the application under consideration, it has nevertheless been found convenient, for predetermined values of $k_p$ and k, to choose k' such that Fp/F is not less than 0.01, preferably not less than 0.1.

To be compatible with many applications, including vehicle industry, the mechanical properties of the protective element shall not be affected by temperature in a wide range of temperatures. Indeed a change in mechanical properties may occur if a material undergoes to a phase transition at a certain temperature. In this connection a material for the protective element is selected among materials having a transition phase at a temperature not lower than 150°C.

The protective element 16 has a thermal shield 19 for the piezoceramic sensor 4.

The thermal shield 19 is provided by a thermally insulating element that is accommodated within the protective element 16 and/or at least one thermally insulating layer which forms part of, or that itself constitutes, the protective element 16.

The thermal shield 19 thermally shields the piezoceramic sensor 4 from the heat coming from the block of friction material 3 or from the brake caliper such that the piezoceramic sensor 4 can function under less onerous operating conditions from the point of view of temperature during heavy braking. Various materials can be used for such purposes such as the so-called thermal barrier (TBC) materials, or else Yttria or Magnesium stabilized Zirconia in the form of mastics, coatings with ceramic compounds or special paints.

The support element 2 is preferably covered with at least one thermally insulating layer 20 upon which the piezoceramic sensors 4 are arranged.

The thermally insulating layer 20, if provided, in particular has a first main planar surface that is conjugated to the first planar surface 5 of the support element 2 and a second planar surface that is parallel to the first planar surface upon which the piezoceramic sensors 4 are arranged.

In fact, in this way the electrically insulated electrical circuit 9, the sensors and the connector are not in direct contact with the support element 2, the contact being mediated by the thermal barrier layer 20 which, being subjected to a thermal gradient through its thickness, causes a significant reduction in the temperature actually experienced by the electrically insulated electrical circuit 9, the sensors and the connector.

In order to achieve good thermal insulation even over long periods of time, it is also appropriate to envisage areas featuring very high thermal conductivity around the thermally shielded elements which are designed to create preferential channels for the thermal dissipation produced during braking.

As a general rule heat dissipation areas must be as wider as possible to avoid heat accumulation and the so called "Oven effect" inducing a temperature increase in the backplate instead of a temperature lowering due to heat accumulation. That means that, apart from the areas beneath the screen printing or few millimeters around them, the metal of the backplate should be left to come in contact with the friction material, or the damping layer is present and leaves a consistent portion of the backplate surface free to heat exchange.

By way of example, these areas may consist of gaps in the thermal barrier layer 20 that are either empty or filled with thermally conductive material.

Preferably, the thermal barrier layer 20 has the same shape and dimensions as the electrical circuit 9, which in turn has a branched structure, such that the thermal dissipation channels are achieved by means of the spaces that are present between the branches.

Typical materials usable for thermal insulating layers 20 are for instance YSZ (Yittria Stabilized Zirconia), Mullite ($Al_{4+2x}Si_{2-2x}O_{10-x}$),), $\alpha$-phase Al2O3 in conjuction with YSZ, , CeO2 + YSZ, Rare-earth zirconates like La2Zr2O7, Rare earth oxides like La2O3, Nb2O5, Pr2O3, CeO2, Metal-Glass Composites. Indicatively, but not restrictively the brake pad 1 may have following sizing of its components: piezoceramic sensor 4 may be typically 1 mm thick; protective element 16 may typically have a maximum thickness of 2 mm, 1 mm above the piezoceramic sensor 4 and 2 mm around it; damping layer 101 may be typically 2-3 mm thick; thermal insulating layer 20 may typically have thickness well below 1 mm and 100 $\mu$m are enough to ensure a sufficient thermal insulation.

The braking device construction method is as follows.

The thermally insulating layer 20 is initially applied, if required, to the support element 2.

The thermally insulating layer 20 is integrated directly onto the main planar surface of the support element 2 which in use is designed to face the element to be braked (which is known and not illustrated for the sake of simplicity), for example the brake disk or drum of a vehicle.

The electrically insulated electrical circuit 9 is then integrated with the support element 2.

The electrically insulated electrical circuit 9 is preferably constructed by means of the screen printing technique.

A lower screen printed layer 9a made of an electrically insulating material is first deposited onto the electrically insulating layer 20, if required, or else directly onto the support element 2, an intermediate screen printed layer 9b made of an electrically conductive material is then deposited onto the lower screen printed layer 9b, thus defining the actual electrical circuit itself, an upper screen printed layer 9c made of an electrically insulating material is then deposited onto the intermediate screen printed layer 9c which leaves the contacts 10, 11 uncovered for the electrical connection of the sensors 4.

The insulating layers 9a, 9c consist, for example, of a base made of alumina/graphite particles (or a silicate matrix) which are then immersed in a matrix of a polymeric nature (preferably polyimide), while the conductive layer 9b consists of silver or palladium screen printing pastes.

The sensors are then integrated, being electrically and mechanically connected to the electrical contacts 10, 11 which are located at the end of each branch of the electric circuit 9.

Preferably, as previously mentioned, a special configuration for the electrodes 14, 15 accommodated on a single face of the piezoceramic sensor 4 is used. Naturally this determines the envisaging of a configuration that is suitable for the contacts formed on the electrical circuit 9. This particular solution avoids the need to make use of bonding when connecting the electrodes to the contacts.

The piezoceramic sensor 4 is therefore permanently connected by means of its two electrodes to the respective contacts by means of a layer 25 composed of a welding paste that is electrically conductive at high temperatures. In practical terms, once the electrical circuit 9 has been formed, said high temperature welding paste layer is applied in the area of the contacts and/or of the electrodes, after which the sensor is positioned by matching its two electrodes with the counterpart contacts provided on the electrical circuit 9. Finally the assembly is cured typically at around 200°C depending upon and in accordance with the specifications of the welding paste used, which is preferably composed of silver as the base element of the electrically conductive component. In principle, depending upon the choice of welding paste, temperatures in the order of 800°C can be reached, thus making the process compatible with high temperature applications such as those for heavy vehicles for example.

At this point the sensors are covered with the related protective elements 16 in the manner previously described above.

Above the electrical circuit 9 and the sensors covered in this manner, the block of friction material 3 is then formed by hot pressing, within the thickness of which the covered sensors are at least partially embedded.

Before pressing the block of friction material 3 the damping layer, if required, is accommodated.

In conclusion, the braking device according to the invention is more reliable and features an improved operating interval during both the production process and the use, and is therefore also compatible with many applications, including heavy duty applications, such as those in the heavy vehicle industry.

The choice regarding the mechanical properties of the protective element is to be made whilst taking into consideration the maximum loads that can be applied during normal operation or during the production process in order to ensure the integrity of the sensors with respect to the stresses they are subjected to, especially during the production process of the braking device.

The protective element can also be functionalized in a way to include a thermal shield so as to shield the sensor from excessive temperature in order to widen the operating temperature interval of the braking device.

The thermal shield can be further improved by integrating within the support element, on the side facing the block of friction material, a further layer of thermally shielding material in such a way that a form of thermally insulated pocket is created within which both the sensors and the electrical circuit to which the sensors are connected, are enclosed. Around this pocket it is necessary to include large areas of high thermal conductivity materials in order to leave some low thermal impedance paths that will dissipate the heat efficiently and therefore leave the sensors and the electrical circuit at lower temperatures and for longer. Finally a layer composed of a high temperature welding paste has been provided for permanently welding the electrodes of the sensors to the contacts of the electrical circuit by means of a curing process which, being performed at a low temperature and at a standard pressure, is absolutely safe as regards the integrity of the piezoceramic sensors, but that once completed allows operating temperatures to be achieved that are above the majority of the Curie temperatures of almost all piezoceramic materials.

## Claims

1. A braking pad for vehicles, comprising a support element (2), a block of friction material (3) supported by the support element (2), and at least one piezoceramic sensor (4) supported by the support element (2) and interposed between the block of friction material (3) and the support element (2), said support element (2) supporting at least one protective element (16) enclosing said at least one piezoceramic sensor (4), said protective element (16) exhibiting mechanical properties adapted to maintain said piezoceramic sensor (4) below its maximum load condition when an external compression force F exceeding 400 kg/cm$^2$ is applied to integrate said block of friction material (3) on said support element (2), **characterized in that** said block of friction material (3), said piezoceramic sensor (4) and respectively said protective element (16) exhibit a linear elastic behaviour with respective elastic constant k, k' and respectively $k_p$ in direction of the compression force F applied to the block of friction material (3), said protective element (16) experiencing a force whose resultant (F') is different from the compression force F applied to the block of friction material (3), such a resultant force (F') being also transmitted to the piezoceramic sensor (4) in turn experiencing a final force F, said elastic constant of said block of friction material (3), said piezoceramic sensor (4) and respectively said protective element (16) being selected so that $F_p/F$ is not less than 0.1

2. The braking pad for vehicles according to claim 1, **characterized in that** said protective element (16) is made of an electrically insulating material.

3. The braking pad for vehicles according to claim 1, **characterized in that** said protective element (16) exhibits mechanical properties such as to limit the force transmitted to the piezoceramic sensor (4) when an external compression force is applied on said block of friction material (3).

4. The braking pad for vehicles according to claim 2, **characterized in that** said protective element (16) is configured to direct at least partly said external compression force onto an area of the support element (2) surrounding said at least one piezoceramic sensor (4).

5. The braking pad for vehicles according to any preceding claim, **characterized in that** said at least one piezoceramic sensor (4) lies in a raised arrangement on the support element (2), and said protective element (16) is made up of a half-shell having an internal contact surface uniform with the external surface of the piezoceramic sensor (4) and a uniform rest base (18) on said support element (2).

6. The braking pad for vehicles according to any preceding claim, **characterized in that** said protective element (16) is dome-shaped.

7. The braking pad for vehicles according to any preceding claim, **characterized in that** said protective element (16) is made up of a material comprising a resin or made up of a ceramic material.

8. The braking pad for vehicles according to any preceding claim, **characterized in that** said protective element (16) has a thermal shield (19) for said at least one piezoceramic sensor (4).

9. The braking pad for vehicles according to claim 8, **characterized in that** said thermal shield (19) is provided by a thermally insulating layer of said protective element and/or by a thermally insulating element accommodated inside said protective element.

10. The braking pad for vehicles according to any preceding claim, **characterized in that** it comprises at least one thermally insulating layer (20) covering said support element (2), whereon said at least one piezoceramic sensor (4) is arranged.

11. The braking pad for vehicles according to any preceding claim, **characterized in that** it comprises a damping layer interposed between said block of friction material (3) and said support element (2).

12. The braking pad for vehicles according to any preceding claim, **characterized in that** the support element (2) supports an electrically insulated electrical circuit (9) that has electrical contacts whereto electrodes of said at least one piezoceramic sensor (4) are connected for collecting an electrical signal emitted by said at least one piezoceramic sensor (4).

13. The braking pad for vehicles according to the preceding claim, **characterized in that** said electrically insulated electrical circuit (9) is screen printed on the support element (2) and has contacts connected to the electrodes by means of a high temperature welding paste.

14. A vehicle, **characterized in that** it incorporates at least one braking pad in accordance with any preceding claim.

**Patentansprüche**

1. Bremsklotz für Fahrzeuge, umfassend ein Trägerelement (2), ein durch das Trägerelement (2) getragener Block aus Reibmaterial (3) und zumindest einen vom Trägerelement (2) getragener und zwischen dem Block aus Reibmaterial (3) und dem Stützelement (2) angeordneter piezokeramischer Sensor (4), wobei das Trägerelement (2) zumindest ein Schutzelement (16) trägt, das den zumindest einen piezokeramischen Sensor (4) umschließt, wobei das Schutzelement (16) mechanische Eigenschaften aufweist, die geeignet sind, den piezokeramischen Sensor (4) unter seinem maximalen Lastzustand zu halten, wenn eine äußere Druckkraft F, die 400 kg/cm$^2$ überschreitet, aufgebracht wird, um den Block aus Reibmaterial (3) auf dem Trägerelement (2) zu integrieren, **dadurch gekennzeichnet, dass** der Block aus Reibmaterial (3), der piezokeramische Sensor (4) und jeweils das Schutzelement (16) ein lineares elastisches Verhalten mit jeweiligen elastischen Konstanten k, k' und jeweils $k_p$ in Richtung der auf den Block aus Reibmaterial (3) aufgebrachten Druckkraft F aufweisen, wobei das Schutzelement (16) eine Kraft erfährt, deren resultierende Kraft (F') sich von der auf den Block aus Reibmaterial (3) aufgebrachten Druckkraft F unterscheidet, wobei eine solche resultierende Kraft (F') ebenfalls auf den piezokeramischen Sensor (4) übertragen wird, der wiederum eine Endkraft $F_p$ erfährt, wobei die elastischen Konstanten des Blocks aus Reibmaterial (3), der piezokeramische Sensor (4) und das Schutzelement (16) jeweils so ausgewählt sind, dass $F_p/F$ nicht kleiner als 0,1 ist.

**2.** Bremsklotz für Fahrzeuge nach Anspruch 1, **dadurch gekennzeichnet, dass** das Schutzelement (16) aus einem elektrisch isolierenden Material besteht.

**3.** Bremsklotz für Fahrzeuge nach Anspruch 1, **dadurch gekennzeichnet, dass** das Schutzelement (16) mechanische Eigenschaften aufweist, um die an den piezokeramischen Sensor (4) übertragene Kraft zu begrenzen, wenn eine äußere Druckkraft auf den Block aus Reibmaterial (3) ausgeübt wird.

**4.** Bremsklotz für Fahrzeuge nach Anspruch 2, **dadurch gekennzeichnet, dass** das Schutzelement (16) so ausgebildet ist, dass es zumindest teilweise die äußere Druckkraft auf einen Bereich des Trägerelements (2) richtet, der den zumindest einen piezokeramischen Sensor (4) umgibt.

**5.** Bremsklotz für Fahrzeuge nach einem der vorhergehenden Ansprüche, **dadurch gekennzeichnet, dass** der zumindest eine piezokeramische Sensor (4) in einer angehobenen Anordnung auf dem Trägerelement (2) liegt und das Schutzelement (16) aus einer Halbschale mit einer inneren Kontaktfläche, die gleichförmig mit der Außenfläche des piezokeramischen Sensors (4) ist, und einer gleichförmigen Ruhebasis (18) auf dem Trägerelement (2) aufgebaut ist.

**6.** Bremsklotz für Fahrzeuge nach einem der vorhergehenden Ansprüche, **dadurch gekennzeichnet, dass** das Schutzelement (16) kuppelförmig ist.

**7.** Bremsklotz für Fahrzeuge nach einem der vorhergehenden Ansprüche, **dadurch gekennzeichnet, dass** das Schutzelement (16) aus einem Material besteht, das ein Harz umfasst oder aus einem keramischen Material besteht.

**8.** Bremsklotz für Fahrzeuge nach einem der vorhergehenden Ansprüche, **dadurch gekennzeichnet, dass** das Schutzelement (16) eine thermische Abschirmung (19) für den zumindest einen piezokeramischen Sensor (4) aufweist.

**9.** Bremsklotz für Fahrzeuge nach Anspruch 8, **dadurch gekennzeichnet, dass** die thermische Abschirmung (19) durch eine thermisch isolierende Schicht des Schutzelements und/oder durch ein thermisch isolierendes Element, das im Innern des Schutzelement untergebracht ist, bereitgestellt ist.

**10.** Bremsklotz für Fahrzeuge nach einem der vorhergehenden Ansprüche, **dadurch gekennzeichnet, dass** er zumindest eine thermisch isolierende Schicht (20) umfasst, die das Trägerelement (2) bedeckt, auf dem der mindestens eine piezokerami-

sche Sensor (4) angeordnet ist.

**11.** Bremsklotz für Fahrzeuge nach einem der vorhergehenden Ansprüche, **dadurch gekennzeichnet, dass** er eine Dämpfungsschicht umfasst, die zwischen dem Block aus Reibmaterial (3) und dem Trägerelement (2) angeordnet ist.

**12.** Bremsklotz für Fahrzeuge nach einem der vorhergehenden Ansprüche, **dadurch gekennzeichnet, dass** das Trägerelement (2) eine elektrisch isolierte elektrische Schaltung (9) trägt, die elektrische Kontakte aufweist, mit denen Elektroden des zumindest einen piezokeramischen Sensors (4) verbunden sind, um ein elektrisches Signal zu erfassen, das vom zumindest einen piezokeramischen Sensor (4) abgegeben wird.

**13.** Bremsbelag für Fahrzeuge nach dem vorhergehenden Anspruch, **dadurch gekennzeichnet, dass** die elektrisch isolierte elektrische Schaltung (9) auf dem Trägerelement (2) siebgedruckt ist und Kontakte aufweist, die mit den Elektroden mittels einer Hochtemperaturschweißpaste verbunden sind.

**14.** Fahrzeug, **dadurch gekennzeichnet, dass** es mindestens einen Bremsklotz nach einem der vorhergehenden Ansprüche aufweist.

## Revendications

**1.** Patin de freinage pour véhicules, comprenant un élément de support (2), un bloc de matériau de friction (3) supporté par l'élément de support (2), et au moins un capteur piézocéramique (4) supporté par l'élément de support (2) et interposé entre le bloc de matériau de friction (3) et l'élément de support (2), ledit élément de support (2) supportant au moins un élément de protection (16) enfermant ledit au moins un capteur piézocéramique (4), ledit élément de protection (16) présentant des propriétés mécaniques adaptées pour maintenir ledit capteur piézocéramique (4) en dessous de sa condition de charge maximale lorsqu'une force de compression externe F supérieure à 400 kg/ cm$^2$ est appliquée pour intégrer ledit bloc de matériau de friction (3) sur ledit élément de support (2), **caractérisé en ce que** ledit bloc de matériau de friction (3), ledit capteur piézocéramique (4) et respectivement ledit élément de protection (16) présentent un comportement élastique linéaire avec une constante élastique respective k, k' et respectivement $k_p$ en direction de la force de compression F appliquée au bloc de matériau de friction (3), ledit élément de protection (16) subissant une force dont la résultante (F') est différente de la force de compression F appliquée au bloc de matériau de friction (3), une telle force résultante (F') étant également transmise au capteur piézocéramique (4) subissant à son tour une force finale $F_p$, ladite constante élastique dudit bloc de matériau de friction (3), dudit capteur piézocéramique (4) et respectivement dudit élément de protection (16) étant sélectionnée afin que $F_p/F$ ne soit pas inférieure à 0,1

2. Patin de freinage pour véhicules selon la revendication 1, **caractérisé en ce que** ledit élément de protection (16) est fait d'un matériau électriquement isolant.

3. Patin de freinage pour véhicules selon la revendication 1, **caractérisé en ce que** ledit élément de protection (16) présente des propriétés mécaniques de sorte à limiter la force transmise au capteur piézocéramique (4) lorsqu'une force de compression externe est appliquée sur ledit bloc de matériau de friction (3).

4. Patin de freinage pour véhicules selon la revendication 2, **caractérisé en ce que** ledit élément de protection (16) est configuré pour diriger au moins partiellement ladite force de compression externe sur une zone de l'élément de support (2) entourant ledit au moins un capteur piézocéramique (4).

5. Patin de freinage pour véhicules selon l'une quelconque des revendications précédentes, **caractérisé en ce que** ledit au moins un capteur piézocéramique (4) se trouve dans un agencement surélevé sur l'élément de support (2), et ledit élément de protection (16) est constitué d'un demi-coque ayant une surface de contact interne uniforme avec la surface externe du capteur piézocéramique (4) et une base de repos uniforme (18) sur ledit élément de support (2).

6. Patin de freinage pour véhicules selon l'une quelconque des revendications précédentes, **caractérisé en ce que** ledit élément de protection (16) est en forme de dôme.

7. Patin de freinage pour véhicules selon l'une quelconque des revendications précédentes, **caractérisé en ce que** ledit élément de protection (16) est constitué d'un matériau comprenant une résine ou est constitué d'un matériau céramique.

8. Patin de freinage pour véhicules selon l'une quelconque des revendications précédentes, **caractérisé en ce que** ledit élément de protection (16) a un écran thermique (19) pour ledit au moins un capteur piézocéramique (4).

9. Patin de freinage pour véhicules selon la revendication 8, **caractérisé en ce que** ledit écran thermique (19) est fourni par une couche thermiquement isolante dudit élément de protection et/ ou par un élément thermiquement isolant dans ledit élément de protection.

10. Patin de freinage pour véhicules selon l'une quelconque des revendications précédentes, **caractérisé en ce qu'**il comprend au moins une couche thermiquement isolante (20) couvrant ledit élément de support (2), sur lequel ledit au moins un capteur piézocéramique (4) est agencé.

11. Patin de freinage pour véhicules selon l'une quelconque des revendications précédentes, **caractérisé en ce qu'**il comprend une couche d'amortissement interposée entre ledit bloc de matériau de friction (3) et ledit élément de support (2) .

12. Patin de freinage pour véhicules selon l'une quelconque des revendications précédentes, **caractérisé en ce que** l'élément de support (2) supporte un circuit électrique (9) électriquement isolé qui a des contacts électriques là où des électrodes dudit au moins un capteur piézocéramique (4) sont connectées pour la collecte d'un signal électrique émis par ledit au moins un capteur piézocéramique (4).

13. Patin de freinage pour véhicules selon la revendication précédente, **caractérisé en ce que** ledit circuit électrique (9) électriquement isolé est sérigraphié sur l'élément de support (2) et a des contacts connectés aux électrodes au moyen d'une pâte de soudage à haute température.

14. Véhicule, **caractérisé en ce qu'**il incorpore au moins un patin de freinage selon l'une quelconque des revendications précédentes.

FIG. 1

FIG. 2

FIG. 3

FIG. 4

4

14

+

—

15

FIG. 5

9

10

+

—

11

FIG. 6

FIG. 7

FIG. 8

back plate production
- Screen printing Deposition
- Component Mounting & Placement
- Soldering
- Product electromechanical Testing

**FIG. 9b**

Friction material deposition
- incoming & storage management of back plate
- Friction Material printing & Oven Curing
- Pad Calibration
- Finishing
- End of On line Testing

**FIG. 10b**

Backend

**FIG. 9a**

Frontend

**FIG. 10a**

FIG. 11a

EP 3 289 238 B1

**FIG. 11b**

**FIG. 12**

**FIG. 13**

**FIG. 14a**

**FIG. 14b**

**FIG. 14c**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT TO20130307 A